# EUROPEAN PATENT APPLICATION

(11) **EP 3 698 639 A1**
(43) Date of publication of application: **26.08.2020**
(21) Application number: 20158244.2
(22) Date of filing: 19.02.2020
(51) Int. Cl.: A23G 9/08, A23G 9/24, A23G 9/48, F25C 1/04

(54) **COATED ICE CUBE AND A METHOD OF PRODUCING COATED ICE CUBES**

(30) Priority: 19.02.2019 PL 42895319
(71) Applicant: Pure Ice Sp. z o.o., 05-850 Ozarow Mazowiecki (PL)
(72) Inventor: Swiderski, Franciszek, 02-886 Warszawa (PL); Sadowska, Anna, 05-500 Piaseczno (PL); Rakowska, Rita, 05-850 Kreczki (PL); Markiewicz, Andrej, 01-494 Warszawa (PL)
(74) Representative: AOMB Polska Sp. z.o.o.

(57) **Abstract**

A coated ice cube, comprising a core and a functional coating, the core comprising frozen water, and the coating comprising a frozen aqueous solution, the functional coating being applied on the surface of the core and constituting not more than 10% by weight of the coated cube.

The object of the invention is also a method of producing coated ice cubes which comprise a core and a functional coating, wherein the core contains frozen water and the coating comprises a frozen aqueous solution, characterised in that it includes a step of producing the cores and a subsequent step of applying the functional coating onto the cores, wherein the step of applying the functional coating consists of contacting the moving cores with a fluid aqueous solution of the coating.

## Description

The object of the invention is a coated ice cube and a method of producing coated ice cubes.

From patent publication US5958481, a process of producing ice cubes having a coating consisting of food dye, citric acid and citrus juice is known. The process is carried out with the use of moulds. In the first step of the process, ice cubes are made in moulds, and then, in the next step, the bottom of the coating is obtained in larger moulds by freezing a thin layer of a solution previously poured into the mould having dimensions larger than the previously formed ice cube. In the next step, the top of the bottom layer is wetted and the previously obtained ice cube is applied thereto, and then in the next step, the whole (i.e. the combined ice cube with the bottom shell) is supplemented with a coating solution, so that the ice cube is surrounded by a coating solution on all sides, and then the whole is frozen to obtain an ice cube with a coloured and flavoured frozen coating surrounding the whole cube cores. The process is carried out with the use of moulds, smaller ones to make ice cubes and then larger in size (correspondingly larger ones for each cube size) to create the bottom layer, connect it to the cube and supplement the remaining sides of the cube with a coating. The cubes obtained in this way are intended to be placed in a drink in which they are dissolved.

WO2013191534 discloses a process of producing ice cubes comprising an upper and lower coloured coating consisting of a dye and an energising ingredient, such as caffeine, and a pH-adjusting ingredient. In the process, the final product is produced in moulds and as a result of gradual addition of subsequent product phases, layer by layer, by freezing each of them in succession or with the use of cold co-extrusion. The ice cubes obtained in this process do not have a coating on the lateral surface of the ice cubes.

In turn, the publication of the international application WO2014174314 discloses a process of producing ice cubes with an inner core containing an active ingredient - a stimulating one like guarana, caffeine, ginseng, alcohol, a soothing one like aloe juice, or an ingredient having a sensory effect like agar, and with an outer coating covering completely or partially the core, containing pure frozen water or an aqueous solution with an ingredient dissolved therein. The process involves producing ice cubes, then melting a cavity in the central part of the ice cube, which is then filled with the content of the active ingredient. The remaining upper part of the product is then formed by closing the core. Due to the structure of the described ice cubes, the process of releasing the active substances from these cores begins after complete melting of at least part of the coating. The cube coating dissolves within 10 minutes, preferably 5 minutes.

Generally, in industrial ice production, processes of producing ready-to-pack and ready-to-transport ice cubes, per se, are used in which:
- first, the water is frozen into the form of ice cubes by producing them in icemakers in which the water is frozen in moulds of various shapes or by producing ice cubes in ice cube machines,
- the produced ice cubes of suitable dimensions are calibrated by passing them through a rotary screen in order to get rid of fines resulting from the processing (cutting, transport) of cubes,
- after which, optionally, ice cubes are additionally frozen,
- and then, optionally, the ice cubes are calibrated/defrosted, usually in a rotary screen.

There is a need to develop ice cubes, the structure of which would allow for a faster release of an ingredient or ingredients of the cube into the drink, without the need to dissolve the entire cube and unnecessarily diluting the drink. There is also a need to develop a simple, easy and quick process of producing ice cubes that would release the ingredient or ingredients contained therein within a relatively short time. There is also a need to develop a process that could be applied with the use of previously known processes and devices.

The object of the invention is a coated ice cube comprising a core and a functional coating, the core comprising frozen water, preferably consisting of frozen water, and the coating comprising a frozen aqueous solution, preferably with a freezing point close to the crystallisation temperature of the core, the functional coating being applied on the surface of the core and constituting not more than 10% by weight of the coated cube.
Preferably, the thickness of the functional coating is from 0.1mm to 0.5mm, preferably from 0.2mm to 0.25mm, more preferably 0.25mm.
Preferably, the functional coating is applied onto the whole surface of the core.
Preferably, the coating contains one or more ingredients from ingredients including: vitamins, minerals, energising substances, sweeteners, prebiotics, acidity regulators, antioxidants, dyes or aromas.
Preferably, the coating ingredients in the form of vitamins and/or minerals are individual, separate ingredients or complexes of these ingredients, forming part of at least one premixture or forming part of a fruit juice or a mix of juices.
Preferably, the fruit juice is a fresh fruit juice or an aqueous solution of concentrated fruit juice with an extract content below 70%.
Preferably, the extract content in the juice is below 10%.
Preferably, the fruit juice is additionally enriched with vitamin C.
Preferably, the mineral is selected from a metal salt, preferably a sodium salt, for example sodium chloride at a concentration of not more than 2%, potassium, zinc, selenium or calcium salts.
Preferably, the single ingredient of the functional coating is vitamin C in synthetic form or in the form of a fruit juice, preferably lemon juice.
Preferably, the functional coating additionally contains a complex of B-group vitamins. Preferably, the functional coating additionally contains at least one energising substance selected from caffeine, taurine or guarana.
Preferably, the additional ingredient of the functional coating is zinc gluconate.

Preferably, the additional ingredient is a natural aroma at a concentration not exceeding 0.05%.

Preferably, the coating further contains a sweetener in the form of glucose.

The object of the invention is also a method of producing coated ice cubes which comprise a core and a functional coating, wherein the core contains frozen water and the coating comprises a frozen aqueous solution, characterised in that it includes a step of producing the cores and a subsequent step of applying the functional coating onto the cores, wherein the step of applying the functional coating consists of contacting the moving cores with a fluid aqueous solution of the coating.
Preferably, the coating is applied by spraying onto the cores.
Preferably, the cores being sprayed are subjected to vibration.
Preferably, during the step of applying the coating, the temperature difference between the cores and the fluid of the aqueous solution of the coating is at least 6°C while maintaining the temperature of the coating solution not higher than 1°C under normal pressure.
Preferably, after the functional coating has been applied, it is set by additional freezing, preferably at a temperature below -5°C.
Preferably, before applying the functional coating, the surface of the ice cubes is smoothed, preferably to a roughness Ra lower than 0.5 mm.
Preferably, the surface of the cubes is smoothed by calibration or defrosting, for example with the use of rotary screens.
Preferably, the functional coating with a maximum thickness of 0.25mm is applied in one production cycle.
Preferably, the process of applying the functional coating is repeated until a maximum coating thickness of not more than 0.5mm is obtained.

In the present application, "ice cubes" means ice blocks of any, in particular not necessarily cubic, shape.

The advantage of immediate release of the functional coating is the controlled transfer of nutrients while maintaining the most important quality function of ice cubes which is the rapid cooling of drinks in which they dissolve and enriching these drinks with additional ingredients, especially bioactive ingredients in a short time and without the need to dissolve the whole volume of the cube.

Now, the invention will be presented in preferred embodiments, with reference to the accompanying drawing in which:
Fig. 1 shows an exemplary process of producing ice cubes according to the invention,

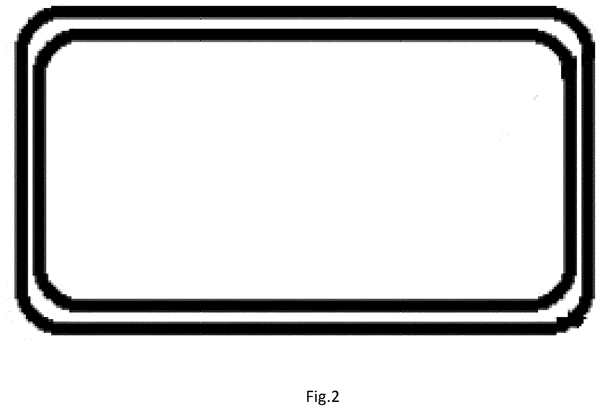

Fig. 2 shows the structure of a functional ice cube according to the invention consisting of a core and a coating (functional coating) enriched with ingredients, in particular bioactive ones.

### Example 1 - Ice cube with a functional coating

Ice cubes have a core containing frozen water. The core is surrounded by a functional coating containing at least one ingredient.

The cubes were examined in order to develop a composition of functional coatings containing bioactive ingredients. The examination concerned determining the effect of various recipe ingredients and extract content on the possibility of applying water coatings with functional additives onto ice cube cores.

The examination involved cubes in which:
- mass of the coating with a thickness of 0.1 mm was 4239g, which was 0.99% of the mass of the functional cube, i.e. with the coating; or 1.0% of the core mass,
- mass of the coating with a thickness of 0.2 mm was 0.848 g, which was 1.96% of the mass of the functional cube, i.e. with the coating; or 2.0% of the core mass,
- mass of the coating with a thickness of 0.3 mm was 1.272 g, which was 2.91% of the mass of the functional cube, i.e. with the coating; or 3.0% of the core mass,

Dimensions of a model ice cube: cylinder with external diameter of 35mm / internal diameter of 10mm; L=30mm
Mass of the model ice cube: 27g
Surface of the model ice cube: 42,39 cm²
Temperature of the examined model ice cube: - 18°C

Aqueous solutions of the following compounds were used:
- glucose
- lemon juice
- concentrated fruit juices: lime, cherry
- single vitamins: vitamin C, niacin
- vitamin premix (vit. B1, B2, B6, B12, vit. E, folic acid, pantothenic acid, niacin, biotin, vit. C)
- minerals: potassium chloride, sodium chloride, zinc gluconate, magnesium lactate, magnesium citrate, magnesium carbonate, magnesium gluconate
- premix of minerals (calcium lactate, potassium phosphate, magnesium carbonate, sodium citrate)
- caffeine
- inulin
- oligofructose in syrup
- aromas: mint, peach, pear

Model drinks (with a volume of 250ml and a temperature of 20°C):
Model drink No. 1: Volume 200 ml composition: 100% water
Model drink No. 2: Volume 200 ml composition: 99.9% water + 0.1% citric acid
Model drink No. 3: Volume 200 ml composition: 90% water + 10% sugar

### The following examinations were carried out:

### 1. Determining the effect of varied contents of the aqueous solution extract on the degree of binding by ice cubes

The binding capacity was measured by measuring the mass of the cube with the coating compared to the mass of that cube before application of the coating. The capacity to bind aqueous solutions by ice cubes was strictly dependent on the content of the extract in these solutions. Based on numerous tests with the use of model glucose solutions, fruit juices and concentrated fruit juices, it was confirmed that for glucose or fructose (ingredients of natural juices, higher content in concentrated juices) - the higher the concentration of the ingredient used in the coating, the lower the crystallisation temperature and the lower the binding capacity in the coating under the same conditions. In particular:
a. The capacity to bind an aqueous glucose solution at a concentration of 10% and at a temperature close to 0°C by ice cubes was about 6-8%. The glucose content in 100 grams of ice cubes was about 0.6-0.8g.
b. The capacity to bind an aqueous glucose solution at a concentration of 20% and at a temperature close to 0°C by ice cubes was about 5-7%. The glucose content in 100 grams of ice cubes was about 1.2-1.6g.
c. The capacity to bind an aqueous glucose solution at a concentration of 30% and at a temperature close to 0°C by ice cubes is about 3-5%. The glucose content in 100 grams of ice cubes was about 1.1-1.3g.
d. The capacity to bind an aqueous glucose solution at a concentration of 40% and at a temperature close to 0°C - glucose does not dissolve completely (supersaturated solution)
e. The capacity to bind a lemon juice with an extract of 8% and at a temperature close to 0°C by ice cubes is about 5-7%.
f. The capacity to bind a concentrated fruit juice (concentrated lime juice) with an extract content of 40% and at a temperature close to 0°C by ice cubes is about 2-4%.
g. It was not possible to obtain a coating made of concentrated cherry juice with an extract content of 68% and at a temperature close to 0°C.

It was determined that solutions (functional mixtures) well soluble in water, having a similar crystallisation temperature to the crystallisation temperature of pure water bind best. It was determined that in order to ensure the best capacity to bind aqueous solutions by ice cubes, it is most desirable to use aqueous solutions with an extract of up to 10% and fresh fruit juices. Concentrated juices should be diluted. When using concentrated juices, a lower dry matter (extract) content can be obtained by adding water to obtain an extract of about 10% (4-7 fold dilution). When using concentrated fruit juices with a high extract content (about 70%), functional coating is not formed on the ice cubes.

### 2. Determining the effect of varied contents of vitamin C in the aqueous solution on the degree of binding the solution by ice cubes

The effect of varied contents of vitamin C in the aqueous solution on the degree of binding by ice cubes was examined. Based on the tests carried out with the use of model aqueous solutions with the addition of synthetic vitamin C, it was determined that:
a. The capacity to bind vitamin C in the applied aqueous solution at a concentration of 0.8% and at a temperature close to 0°C by ice cubes is about 5-7%. The content of vitamin C in 100 grams of ice cubes is about 40-60 mg, which is 50-70% RI (Reference Intake).
b. The capacity to bind vitamin C in the applied aqueous solution at a concentration of 4% and at a temperature close to 0°C by ice cubes is about 5-7%. The content of vitamin C in 100 grams of ice cubes is about 190-210mg, which is 240-260% RI.
c. The capacity to bind vitamin C in the applied aqueous solution at a concentration of 4.8% and at a temperature close to 0°C by ice cubes is about 5-7%. The content of vitamin C in 100 grams of ice cubes is about 230-260mg, which is 290-325% RI.

It was determined that the concentration of vitamin C does not affect the binding capacity (varied content of vitamin C in the applied aqueous solution does not significantly affect the degree of binding the solution by ice cubes), therefore this vitamin can be added in significant amounts even several times exceeding the demand for this ingredient. The content in the solution should be selected according to the desired RI content in the final product, in addition, due to losses when binding the solution, the amount of vitamin C in natural juices is insufficient to ensure a satisfactory content of RI in the final product, therefore it is advisable to add or use only synthetic vitamin.

### 3. Examining the possibility of enriching the coating of ice cubes with B-group vitamins (for example niacin)

The effect of varied contents of niacin in the aqueous solution on the degree of binding the solution by ice cubes was examined. Based on the tests carried out with the use of model aqueous solutions with the addition of synthetic niacin, it was determined that:
a. The capacity to bind niacin in the applied aqueous solution at a concentration of 0.16% and at a temperature close to 0°C by ice cubes is about 2-4%. The content of niacin in 100 grams of ice cubes is about 3-6mg, which is 20-40% RI.
b. The capacity to bind niacin in the applied aqueous solution at a concentration of 0.32% and at a temperature close to 0°C by ice cubes is about 2-4%. The content of niacin in 100 grams of ice cubes is about 6-12mg, which is 40-75% RI.
c. The capacity to bind niacin in the applied aqueous solution at a concentration of 0.64% and at a temperature close to 0°C by ice cubes is about 2-4%. The content of niacin in 100 grams of ice cubes is about 13-26mg, which is 80-160% RI.

It was determined that varied contents of niacin in the aqueous solution do not significantly affect the degree of binding the solution by ice cubes.

### 4. Examining the possibility of supplementing the vitamin C content in used natural juices with the addition of synthetic vitamin C to the desired RI value

The capacity to bind a fruit juice (lemon juice in this example) with an extract of 8% and at a temperature close to 0°C by ice cubes is about 6-8% (about 3-4 mg of vit. C / 100g of ice cubes, which is about 5% RI). Accordingly, it is necessary to supplement the vitamin C content by adding synthetic vitamin C to the assumed RI value (e.g. up to 100% RI - the addition of synthetic vitamin C should be about 75 mg / 100g of ice cubes, i.e. in lemon juice applied to cubes, there should be about 1% of synthetic vitamin C).

### 5. Examining the possibility of binding a vitamin premix by ice cubes

The possibilities of adding a vitamin premix to the aqueous solution of the coating and the degree of binding this solution were examined. Based on numerous tests carried out with the use of model aqueous solutions with the addition of vitamin premix, it was determined that:
a. The capacity to bind vitamin premix in the applied aqueous solution at the level of 50% RI and at a temperature close to 0°C by ice cubes is about 3-5%.
b. The capacity to bind vitamin premix in the applied aqueous solution at a level of 100% RI and at a temperature close to 0°C by ice cubes is about 3-5%.
c. The capacity to bind vitamin premix in the applied aqueous solution at a concentration of 200% RI and at a temperature close to 0°C by ice cubes is about 3-5%.

It was determined that the examined varied contents of vitamin premix in the aqueous solution do not significantly affect the degree of binding the solution by ice cubes. Conclusion: the premix concentration does not affect the binding capacity, the content in the solution should be selected according to the desired RI content in the final product.

### 6. Examining the possibility of binding minerals by ice cubes

It was determined that:
a. The capacity to bind sodium chloride at a concentration of 0.5% in the applied aqueous solution and at a temperature close to 0°C by ice cubes is about 11-13%.
b. The capacity to bind sodium chloride at a concentration of 2% in the applied aqueous solution and at a temperature close to 0°C by ice cubes is about 5-7%.
c. The capacity to bind sodium chloride at a concentration of 5% in the applied aqueous solution and at a temperature close to 0°C by ice cubes is about 2-4%.
d. The capacity to bind sodium chloride at a concentration of 10% in the applied aqueous solution and at a temperature close to 0°C by ice cubes is about 1%.
   It was determined that the addition of sodium chloride significantly affects the crystallisation temperature of the solution - therefore the concentration of 2% in the solution should not be exceeded, as a higher concentration significantly affects the % of binding.
e. The capacity to bind potassium chloride in the applied aqueous solution at a concentration of 15% and at a temperature close to 0°C by ice cubes is about 0.5%.
f. The capacity to bind magnesium compounds at a concentration of: 5%, 15%, 30% and at a temperature close to 0°C - all the examined magnesium compounds (magnesium lactate, magnesium citrate, magnesium carbonate, magnesium gluconate) in an aqueous solution formed a suspension with a visible white precipitate. Upon application, the cubes formed a thick, white shell, thereby changing colour and clarity of the cubes. The capacity to bind magnesium lactate by ice cubes was about 10%. Upon dissolution of the cubes with a aqueous coating of magnesium compounds, a precipitate was observed in the water at the bottom of the vessel.
g. The capacity to bind zinc gluconate at a concentration of 5% and at a temperature close to 0°C by ice cubes is about 3-5%. The content of zinc in 100 grams of ice cubes is about 10-30 mg, which is 100-300% RI.
h. Upon dissolution in water, the mineral premix formed a suspension with a visible precipitate.
i. The vitamin-mineral premix (250% RI)% and at a temperature close to 0°C was not bound by ice cubes - upon dissolution in water it formed a suspension with a visible precipitate.
j. It was not possible to obtain a shell made of concentrated cherry juice with an extract content of 68% and at a temperature close to 0°C.

### 7. Examining the possibility of adding other bioactive ingredients (prebiotic, caffeine, taurine) to the shell bound by ice cubes.

The possibilities of adding other bioactive ingredients (prebiotic - inulin and oligofructose, caffeine, taurine) in aqueous solution and the degree of binding these solutions by ice cubes were examined. Based on numerous tests carried out with the use of model aqueous solutions with the addition of synthetic niacin, it was determined that:
a. The capacity to bind inulin in the applied aqueous solution at a concentration of 7.5% and at a temperature close to 0°C by ice cubes is about 4-5% (about 300-400mg of inulin/100 g of ice cubes).
b. The capacity to bind oligofructose (in the form of a syrup) in the applied aqueous solution at a concentration of 7.5% and at a temperature close to 0°C by ice cubes is about 4-5%.
c. The capacity to bind caffeine in the applied aqueous solution at a concentration of 0.1% and at a temperature close to 0°C by ice cubes is about 4-5% (about 30-50 mg of caffeine/100 g of ice cubes).
d. The capacity to bind taurine in the applied aqueous solution at a concentration of 6% and at a temperature close to 0°C by ice cubes is about 0.5-1% (about 30-60 mg of taurine/100 g of ice cubes).

It was determined that it is possible to add aqueous solutions of inulin, caffeine, and taurine to the shell of ice cubes. The solution with taurine had the lowest, but still satisfactory capacity to bind the carrier, the binding of the other solutions was at a similar level to vitamin mixtures.

### 8. Examining the possibilities of adding natural aromas

The possibility of adding varied content of natural aromas (pear, peach, mint) in the aqueous solution versus the degree of binding the solution by ice cubes was examined. Based on the tests carried out with the use of model aqueous solutions with the addition of aromas, it was determined that:
a. The capacity to bind aroma in the applied aqueous solution at a concentration of 0.011% and at a temperature close to 0°C by ice cubes is about 5-7%.
b. The capacity to bind aroma in the applied aqueous solution at a concentration of 0.2% and at a temperature close to 0°C by ice cubes is about 0.5%.

It was determined that it is possible to add aroma to the shell, and the examined varied aroma content in the aqueous solution significantly affects the degree of binding the solution by ice cubes. The lowest possible concentration (about 0.011-0.050%) of aromas in the solution applied onto the core should be used.

### 9. Examining the impact of the combined use of selected bioactive substances on the formation of ice coating

Based on the tests carried out with the use of model aqueous solutions with the simultaneous addition of several bioactive substances, it was determined that:
a. The capacity to bind an aqueous solution containing glucose, vitamin C, niacin and aroma in the applied aqueous solution at a concentration of bioactive ingredients of 45% and at a temperature close to 0°C by ice cubes is about 2-4%.
b. The capacity to bind an aqueous solution containing lemon juice, vitamin C (100% RI in total) and aroma at a temperature close to 0°C by ice cubes is about 4-6%.

It was determined that the use of several selected bioactive substances, such as vitamin C, niacin and glucose, does not adversely affect the formation of the shell.
The addition of vitamin C or lemon juice improves glucose solubility, so that a clear solution at a concentration of 40% can be obtained, which was not possible with model examinations of glucose solution.

RI for niacin at a level of 100% (16 mg) is the highest compared to the RI values determined for other B-group vitamins (0.0025 mg to 1.4 mg), indicating that these amounts do not have any major impact on the capacity to bind by the coating being formed.

### 10. Evaluation of sensory quality of ice cubes with various additives, taking into account their forms

Upon dissolution in water (about 200 ml), ice cubes (about 100 g) prepared with the addition of vitamin C showed a slightly sour taste that was more intensively perceptible in solutions with a higher addition of this vitamin. Cubes with potassium salt and those with the addition of a mineral premix were characterised by a bitter, metallic taste which was more intense in solutions with a higher concentration. The addition of magnesium, calcium, sodium or potassium salts in amounts significant from a nutritional point of view caused significant changes in taste and appearance of cubes with a functional shell. Solutions with ice cubes with added glucose showed a slightly sweet taste, while those with added NaCl showed a slightly salty taste. Ice cubes with a shell containing added aromas showed a delicate taste of added aromatising ingredients. No change in taste was observed in the solutions prepared with the addition of other functional ingredients.

### 11. Exemplary recipe compositions I, II, III of cubes with coatings

### An example of cube of composition I - with vitamin C.

| | | |
|---|---|---|
| | Ingredient | % |
| | Core (of ice cube) | 93 |
| | Shell | 7 |
| | | |
| Shell | Lemon juice | 98.9 |
| | Vitamin C | 1.1 |
| | | |
| Whole cube (100% RI for vitamin C) | Water | 93 |
| | Lemon juice | 6.923 |
| | Vitamin C | 0.077 |

### An example of cube of composition II - Multivitamin

| | | |
|---|---|---|
| | Ingredient | % |
| | Core (of ice cube) | 97 |
| | Shell | 3 |
| | | |
| Functional coating | Water | 95.98 |
| | Vitamin C | 2.66 |
| | Niacin | 0.53 |
| | Vitamin B6 | 0.46 |
| | Vitamin B1 | 0.36 |
| | Vitamin B12 | 0.0001 |
| | | |
| Whole cube (100% RI for B-group vitamins, niacin and vitamin C) | Water | 99.90 |
| | Vitamin C | 0.08 |
| | Niacin | 0.016 |
| | Vitamin B6 | 0.0014 |
| | Vitamin B1 | 0.0011 |
| | Vitamin B12 | 0.0000025 |

### An example of cube of composition III - Energy

| | | |
|---|---|---|
| | Ingredient | % |
| | Core (of ice cube) | 97 |
| | Coating | 3 |
| | | |
| Coating (100% RI for vitamins C, B1, B6, B12 and zinc) | Water | 52.34 |
| | Vitamin C | 2.66 |
| | Vitamin B6 | 0.46 |
| | Vitamin B1 | 0.36 |
| | Vitamin B12 | 0.0001 |
| | Niacin | 0.53 |
| | Zinc gluconate | 2.33 |
| | Taurine | 6.66 |
| | Caffeine | 1 |
| | Glucose | 33.33 |
| | Peach aroma | 0.33 |
| | | |
| Whole cube (100% RI for vitamins B1, B6, B12 and zinc) | Water | 98.29 |
| | Vitamin C | 0.08 |
| | Vitamin B6 | 0.0014 |
| | Vitamin B1 | 0.0011 |
| | Vitamin B12 | 0.0000025 |
| | Niacin | 0.016 |
| | Zinc gluconate | 0.07 |
| | Taurine | 0.2 |
| | Caffeine | 0.03 |
| | Glucose | 1.3 |
| | Peach aroma | 0.01 |

### Version of composition III of the coating:

- vitamin C content - in 100 g of ice cubes, vitamin C content is about 80 mg, which is 100% of the daily demand for this vitamin
- content of B-group vitamin complex (B1, B3, B6, B12) - in 100 g of ice cubes in Multivitamin and Energy versions, the level of these vitamins is 1.1 mg, 16 mg, 1.4 mg, 2,5 µg, respectively, which provides 100% of the daily demand for these ingredients
- content of the mineral ingredient - zinc gluconate (colloquially referred to as zinc) - in 100 g of ice cubes in the Energy version, the level of this ingredient is 10 mg, which ensures 100% of the daily demand for this ingredient
- taurine content - in 100 g of ice cubes in the Energy version, the level of this amino acid is 400 mg and is comparable with the level of this ingredient in energy drinks (no RI for taurine)
- caffeine content - in 100 g of ice cubes in the Energy version, the level of this vitamin is 30 mg and is comparable with the level of this ingredient in energy drinks (no RI for caffeine)

Summary of results: the examinations confirmed the possibility of binding functional and aromatic mixtures:
1. The examinations conducted on a laboratory scale showed the possibility of obtaining functional ice cubes enriched with bioactive ingredients. These cubes consist of a functional coating of varied thickness, containing in its composition bioactive substances in a determined amount, and a core consisting of an ice cube formed by freezing water without any additives.
2. Functional ice cubes enriched with bioactive ingredients may contain natural fruit juices and vitamins, for example water-soluble vitamins, such as vitamin C and B-group vitamins, energising substances and aromas.
3. In order to obtain the desired health-promoting properties of ice cubes, it is necessary to supplement the composition of functional coatings of fruit juices with water-soluble vitamins in a synthetic form to a determined level of RI. It is necessary to use solutions with an appropriate extract, which has a great impact on the capacity to bind these solutions by ice cubes.
4. The resulting functional ice cubes enriched with bioactive ingredients, with determined ranges of the additive, are characterised by good sensory quality.
5. The functional ice cubes developed are characterised by a high content of bioactive substances. They are rich in ingredients derived from fruit juices and additionally enriched with vitamin C, B-group vitamins and caffeine/guarana having stimulant properties (energy drink). Functional ice cubes enriched with bioactive ingredients can be recommended as health-promoting products made on the basis of natural ingredients with the addition of vitamins and energising ingredients.
6. The examination of the possibility of adding minerals in order to enrich ice cubes has shown the possibility of adding those ingredients the demand for which is low, e.g. zinc, selenium. The addition of magnesium, calcium, sodium or potassium salts in amounts significant from a nutritional point of view causes significant changes in taste and appearance of cubes with a functional coating. Therefore, their use as enriching supplements or supplements supporting the regeneration of the body is possible, but it is associated with a deterioration in taste and appearance of the drink in which they are dissolved.

Examination was carried out on the speed of passage of soluble bioactive ingredients from ice cubes into water and model drinks containing citric acid and sucrose (equivalent of juices) made on the example of the most labile, fast-decomposing ingredient which is vitamin C.

The examination involved ice cubes in which:
- mass of the coating with a thickness of 0,1 mm =>0.4239g => 0.99% of the mass of the functional cube, i.e. with the coating/ 1.0% of the mass of the original cube
- mass of the coating with a thickness of 0,2 mm =>0.848g => 1.96% of the mass of the functional cube, i.e. with the coating/ 2.0% of the mass of the original cube
- mass of the coating with a thickness of 0,3 mm =>1.272g => 2.91% of the mass of the functional cube, i.e. with the coating/ 3.0% of the mass of the original cube

Dimensions of a model ice cube: cylinder with external diameter of 35mm / internal diameter of 10mm L=30mm
Mass of the model ice cube: 27g
Surface of the model ice cube: 42,39 cm²
Temperature of the examined model ice cube: - 18°C
The model drink was: water with a volume of 250ml and a temperature of 20°C

Examination of dissolving coated cubes was carried out using the following methods:
a) Method No. 1: The model drink was placed on precise scales, every 3 seconds from the insertion of the functional ice cube the cube was removed from the drink to check the scales indication, during the time between the 3rd and 5th measurement (after 10-15 sec) the scales indications for the model drink increased by the mass of the shell previously applied onto the cube.
a) Method No. 2: After inserting the functional cube with vitamin C content into the model drink, fluid samples (drink with the ice cube) were taken every 3 seconds, then the collected samples were examined to determine the vitamin C content, the result of the examination showed that the content of vitamin C in samples 1-4 gradually increased, and in the 5th sample it slightly decreased, which indicated full release of the coating during the collection of 4 samples, the decrease in content means that the vitamin began to evaporate.

The purpose of additional examination was to determine the effect of various recipe ingredients and extract content in the coating and in the drink on the dissolution rate of the coating in the model drink. Furthermore, vitamin C content in functional ice cubes and in the model drink depending on its recipe composition was analysed.

### Examination findings

### 1. Determination of the dissolution rate of (water-soluble) bioactive ingredients contained in the functional ice cube coating.

The examinations were carried out for selected bioactive components soluble in water: vitamin C was added in various concentrations which were related to the body's need for this ingredient. Sucrose at a concentration of 10% and 20% in the coating was also added to the ice cubes. The drink was water.

Based on the conducted examinations, it was determined that:
a. A functional coating with vitamin C (vitamin C content in 100 grams of ice cubes is about 40-60 mg; 50-70% of Reference Intake) dissolved in 10 to 15 seconds in water.
b. A functional coating with vitamin C (vitamin C content in 100 grams of ice cubes is about 190-210mg; which is 240-260% RI) dissolved in 10 to 15 seconds in water.
d. A functional coating with vitamin C (vitamin C content in 100 grams of ice cubes is about 230-260mg; which is 290-325% RI) dissolved in 10 to 15 seconds in water.
e. A functional coating with the addition of a 10% sucrose solution (sucrose content in 100 grams of ice cubes is about 0.6-0.8g) dissolved in 10 to 15 seconds in water.
f. A functional coating with the addition of a 20% sucrose solution (sucrose content in 100 grams of ice cubes is about 1.2-1.6g) dissolved in 10 to 15 seconds in water.

Examined concentrations of vitamin C and sucrose in the functional coating related to the body's needs within 50% to 325% RI did not affect the dissolution rate of the coating in water. The obtained results indicate that the ice cube coating containing, in its composition, both vitamin C and sucrose dissolves in water in a very short time of about 10-15 seconds.

The obtained results of the dissolution rate of the coating in water can be referred to other ingredients well soluble in water, such as: B-group vitamins, taurine, caffeine, minerals and other water-soluble ones.

### 2. Determining the effect of selected components of the model drink on the dissolution rate of the functional ice cube coating

The examinations were carried out on components such as citric acid and sucrose, usually found in food drinks consumed with the addition of ice cubes. Adopted levels of additives used were determined on the basis of the amounts contained in fruit drinks, i.e. the content of citric acid at a level of 0.5% and sucrose - 10% and 20%.
a) Determining the effect of the addition of citric acid to an aqueous solution (model drink) on the dissolution rate of the functional coating.
   The effect of the acidic environment in aqueous solution on the dissolution rate of functional ice cubes was examined. Based on the tests carried out, it was determined that the functional coating found on ice cubes dissolved in less than 15 seconds in an aqueous solution with a 0.5% addition of citric acid. It was determined that the content of citric acid in an aqueous solution does not significantly affect the dissolution rate of the functional coating in the model drink.
b) Determining the effect of the addition of sucrose to an aqueous solution (model drink) on the dissolution rate of the functional coating.
   The effect of the extract content in aqueous solution on the dissolution rate of functional ice cubes was examined. Based on the tests carried out, it was determined that the functional shell found on ice cubes dissolved, as in previous examinations, after 10-15 seconds in aqueous solution with a 15% addition of sucrose. It was determined that the sucrose content in an aqueous solution at the above concentration does not significantly affect the dissolution rate of the functional coating in the model drink.
   The obtained results indicate that the most important components of fruit drinks, such as sugars and acids, do not affect the dissolution rate of the functional shell.

### 3. Examining the content of vitamin C in functional coatings of cubes and in model drink solutions resulting from the addition of ice cubes

Vitamin C belongs to the bioactive compounds characterised by low stability, decomposing quickly especially in an environment with low acidity. The determination was made after 20-30 minutes, i.e. the time during which drinks are usually consumed.

The examination involved determination of vitamin C content in prepared model solutions with dissolved functional ice cubes (three model drinks: water, water with 0.1% addition of citric acid, water with 10% addition of sugar) and in functional ice cubes. The vitamin C content was determined by the Tillmans method according to Polish Standard PN-A-75101-11: 1990 (Fruit and vegetable preserves - Preparation of samples and physicochemical methods - Determination of vitamin C content). The procedure for preparing samples for determination of vitamin C content consisted of preparing cubes with a coating containing a specific content of vitamin C (Table 1), which were frozen and stored in a frozen state at about - 20°C for about 2 hours, and then of preparing model drinks in which cubes were dissolved (Table 1). The cubes in the model drinks were held until the dissolution of the functional coating. In the case of examining for vitamin C content in functional ice cubes, the determination was carried out immediately after storage of the cubes in a frozen state. Based on the results obtained (Table 1), it was found that losses of vitamin C resulting from preparation of cubes, storage thereof in a frozen state, and then preparation of model drinks with their participation were about 9%, 4%, and 8%, respectively, in a model drink containing water, water with the addition of citric acid, water with the addition of sugar. In the case of functional ice cubes, losses of vitamin C resulting from the process of sample preparation and storage in a frozen state were 8 and 10% for ice cubes enriched with various amounts of vitamin C -the conducted examinations showed a loss of vitamin C in the process of preparation and storage of cubes at a level of 8% for ice cube "1" (original vitamin C content 77.7 +/- 6.2mg/100g) and 10% for ice cube "2" (original vitamin C content 111 +/- 4.9 mg/100g - according to Table 1b). Examination of vitamin C losses in the melting process of the coating in various drinks: the smallest (4%) loss of vitamin C was recorded in drinks containing vitamin C in its composition, in water and in sweetened drink, the loss was comparable and amounted to 8-9%.

**Table 1. Content of vitamin C a) in cubes with functional coating and b) in model drink solutions with dissolved functional ice cubes.**

| a) | | |
|---|---|---|
| Content of vitamin C in the functional coating | Content of vitamin C from calculations | Content of vitamin C from determinations |
| | mg/100 g | |
| Ice cubes 1 | 77,7±6,2 | 70,98±0,96 |
| Ice cubes 2 | 111,7±4,9 | 100,2±0,24 |

| b) | | |
|---|---|---|
| Examined model solutions with functional ice cubes and the functional ice cubes | Content of vitamin C from calculations | Content of vitamin C from determinations |
| | mg/100 g | |
| Model drink with functional ice cubes (solution: 100% water) | 56,0±2,8 | 51,0±0,67 |
| Model drink with functional ice cubes (solution: 99.9% water; 0.1% citric acid) | 60,2±4,5 | 57,6±0,66 |
| Model drink with functional ice cubes (solution: 90% water; 10% sucrose) | 44,6±3,1 | 41,0±0,33 |

Examinations have also shown that very fast dissolution of the coating (about 15 seconds) had practically no major impact on vitamin C losses in model aqueous solutions containing sugar and citric acid (main ingredients of juices) 20 minutes after dissolution of the ice cube in these solutions. The obtained results indicate that the developed functional ice cubes enriched with bioactive ingredients can be a valuable product that fulfils utility functions - cooling drinks and dishes, and can also be a valuable product from a nutritional point of view, increasing the content of bioactive ingredients in consumed chilled drinks. Examinations have shown that losses of vitamin C, which is the most sensitive to this factor, occur at a level <10% in the process of preparation and storage of the product. The loss of vitamin C in a drink is at a similar level. A 10% level of vitamin C losses is a moderate value.

Based on the dissolution tests for cubes with a coating of varied composition, the time to dissolve the coating was confirmed as: 10-15 sec. The almost immediate release of the ingredients contained in the ice cube shell is confirmed by the following example of heat transfer calculation:
Ice melting heat: 335kJ/kg; specific heat of ice: 2.1kJ/kg^{∗}K
Specific heat of water: 4190J/kg^{∗}K
Not taking into account the heat exchange in the environment, a single model ice cube is able to cool a model drink by a maximum of 10°C, followed by its complete dissolution.
The amount of energy needed to dissolve a model ice cube is: 10065.6 J; the amount of heat necessary to cool a model drink by 1°C => 1047.5 J (10065.6 / 1047.5 = 9.61°C)
To dissolve the shell
a. with a thickness of 0.1 mm 158.067 J => cooling a drink by 0.15°C
b. with a thickness of 0.2 mm 316.13 J => cooling a drink by 0.3°C
c. with a thickness of 0.3 mm 474.201 J => cooling a drink by 0.45°C

In each of the above cases, the coating was dissolved in the drink in less than 15 seconds.

### Conclusions

- Functional ice cubes, due to their specific structure (core and functional shell), deliver bioactive ingredients to the drink in a very short time not exceeding 15 seconds.
- The developed functional ice cubes are characterised by a high content of bioactive substances that get into the drink in a very short time while maintaining high stability after 20 minutes of storing the drink, i.e. the period during which drinks are usually consumed.
- The functional shell of ice cubes may consist of water-soluble ingredients, e.g. juices, vitamins, bioactive substances, minerals and aromas, the concentration of selected ingredients must not cause oversaturation of the solution and must not significantly lower the crystallisation temperature of the solution.
- The content of the drink does not have a significant impact on the dissolution time of the shell since it is the principles of heat exchange and thermodynamics which have a decisive impact on the process of releasing functional substances.
Compared to solutions known on the market, where the ice cube contains functional ingredients in its entire mass or its part, the solution according to the invention transfers to the drink / releases the ingredients from the functional coating to the drink without the necessity to completely dissolve the cube's core. As is apparent from the example above: the full dissolution of the model ice cube will occur after the drink cools by 9.6°C and the full transfer of functional ingredients of the coating to the drink (dissolution of the coating) of the cube according to the invention is 40-64 times faster.
The coating thickness was selected taking into account:
- cube shape (its active surface application of the coating)
- quantity of functional ingredients that a portion of ice cubes should contain
Conclusions: Maximum thickness of the coating layer is 0.5mm - a thicker layer breaks and detaches from the cube core due to the difference in density of both materials.

### Example - Process of producing ice cubes with a thin functional coating according to the invention

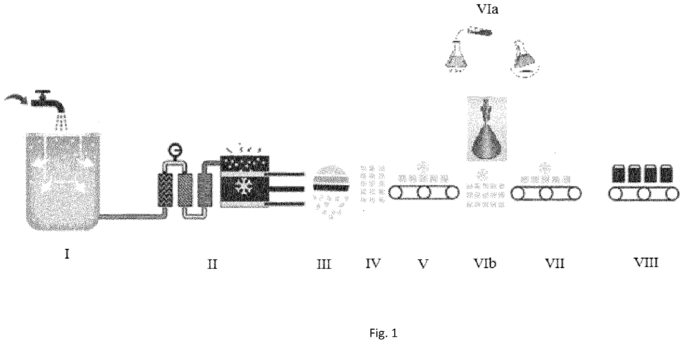

Process of producing ice cubes with a functional coating is shown in Fig. 1. After producing, calibrating and freezing ice cubes to a temperature of -10°C, a functional coating is applied by spraying the frozen cubes with a prepared functional mixture in an ice cube calibration device. The calibrator keeps the cubes in constant motion, thus ensuring even coverage of the cubes with the coating fluid being applied. An exemplary composition of the coating applied on cubes: an aqueous solution with a vitamin C content at a concentration of 4%.

In order to set the functional coating on the cube after its application and after preventing the coating from dripping from the cube after packaging, the cubes should be additionally frozen to a temperature below -10°C, ensuring that the product is kept fully frozen throughout the production and transport cycle.

An exemplary production cycle for producing an ice cube with a coating includes the following steps:
**Step I:** Preparation of water for the production of cores - filtration of raw water to achieve osmotic water with a conductivity <30umS/cm with a dry precipitate content <100ppm with a PH level of 6.5-7.5. The so prepared water must be disinfected by irradiation with UV light before being fed to the ice cube machine.
**Step II:** Freezing of core water in the form of tubes with a diameter of D35mm / d5mm in the ice cube machine.
**Step III:** Cutting core tubes in the ice cube machine into 20-40mm long ice cubes.
**Step IV:** Calibration of core ice cubes - passing the cubes through a rotary screen in order to get rid of fines resulting from cutting and transport of the core cubes.
**Step V:** Freezing core ice cubes to a temperature below -5°C.
**Step VIa:** Preparation of a fluid aqueous solution for the coating.
**Step VIb:** Application of the functional coating by spraying the fluid aqueous solution for the coating onto the cores that are in motion - falling, subjected to vibrations or passing through a rotary screen for defrosting or additional calibration thereof.

The process takes place at a controlled ambient temperature of 1-5°C.

The limitation of the process speed is the feed rate of the functional shell solution which is 1.4l/min - higher speed is not recommended due to cracking of the cubes as a result of thermal shock caused by too much relatively warm fluid applied onto the frozen core.
- ice feed rate: 32.5 kg/min (1200 cubes/min), feed rate of the shell solution: 1.3 l/min => **shell thickness 0.25mm**
- ice feed rate: 32.5 kg/min (1200 cubes/min), feed rate of the shell solution: 0.5 l/min => **shell thickness 0.1mm**
- ice feed rate: 17.5 kg/min (650 cubes/min), feed rate of the shell solution: 1.4 l/min => **shell thickness 0.5mm**

**Step VII:** Freezing of the functional coating, e.g. by transporting ice cubes/cores in a freezing tunnel with an ambient temperature >-20°C, with a speed ensuring a minimum of 20mins of the cube's staying at a negative temperature.
**Step VIII:** The cubes obtained are then customised and packaged.

Optionally, the functional coating is applied by transporting ice cube cores through a stream of prepared solution or immersing the transported cubes in the prepared solution. However, both of the above methods are less preferable compared to the method of spraying the cubes in motion - because as a result of pouring or immersion of frozen cubes in the prepared substance, due to the large amount of liquid at a comparatively high temperature, there is a high risk of surface flooding of ice cube, which prevents the coating from binding the support and causes ice cubes to crack due to thermal shock.

Thickness of the functional layer applied in one operation should not exceed 0.25 mm (250 µm) in thickness. Applying a thicker coating in a single process significantly slows down the production process. The 0.25 thick coating is the optimal coating in terms of durability and speed of the production process. In order to increase the thickness (content of functional ingredients on a single cube) or to apply an additional layer with a different functionality, the application process should be repeated (freezing - applying the coating - freezing - applying the next layer - re-freezing). However, repeating the step of spraying the coating significantly prolongs the production process and increases its cost. The coating with a maximum total thickness of 0.5mm is applied - a thicker layer breaks and detaches from the cube core due to the difference in density of both materials.

## Claims

1. A coated ice cube, comprising a core and a functional coating, the core comprising frozen water, and the coating comprising a frozen aqueous solution, the functional coating being applied on the surface of the core and constituting not more than 10% by weight of the coated cube.

2. The ice cube according to claim 1, **characterised in that** the thickness of the functional coating is from 0.1mm to 0.5mm, preferably from 0.2mm to 0.25mm, more preferably 0.25mm.

3. The ice cube according to claim 1 or 2, **characterised in that** the functional coating is applied onto the entire surface of the core.

4. The ice cube according to any one of the preceding claims, **characterised in that** the core consists of frozen water.

5. The ice cube according to any one of the preceding claims, **characterised in that** the coating comprises a frozen aqueous solution with a freezing point close to the crystallisation temperature of the core.

6. Ice cube according to any one of the preceding claims, **characterised in that** the coating contains one or more ingredients from ingredients including: vitamins, minerals, energising substances, sweeteners, prebiotics, acidity regulators, antioxidants, fruit juices, dyes or aromas.

7. A method of producing coated ice cubes which comprise a core and a functional coating, wherein the core contains frozen water and the coating comprises a frozen aqueous solution, **characterised in that** it includes a step of producing the cores and a subsequent step of applying the functional coating onto the cores, wherein the step of applying the functional coating consists of contacting the moving cores with a fluid aqueous solution of the coating.

8. The method according to claim 7, **characterised in that** the coating is applied by spraying.

9. The method according to claim 8, **characterised in that** the sprayed cores are subjected to vibration.

10. The method according to any one of claims 7 to 9, **characterised in that** during the step of applying the coating, the temperature difference between the cores and the fluid of the aqueous solution of the coating is at least 6°C while maintaining the temperature of the fluid of the coating solution not higher than 1°C under normal pressure.

11. The method according to any one of claims 7 to 10, **characterised in that** after the functional coating has been applied, it is set by additional freezing, preferably at a temperature below 5°C.

12. The method according to any one of claims 7 to 11, **characterised in that** before applying the functional coating, the surface of the ice cubes is smoothed, preferably to a roughness Ra lower than 0.5 mm.

13. The method according to claim 12, **characterized in that** the surface of the cubes is smoothed by calibration or defrosting, for example with the use of rotary screens.

14. The method according to any one of claims 7 to 13, **characterised in that** the functional coating with a maximum thickness of 0.25mm is applied in one production cycle.

15. The method according to any one of claims 7 to 14, **characterised in that** the process of applying the functional coating is repeated until a maximum coating thickness of not more than 0.5mm is obtained.
